# EUROPEAN PATENT SPECIFICATION

(11) **EP 2 981 015 B1**
(45) Date of publication and mention of the grant of the patent: **27.12.2017**
(21) Application number: 13880432.3
(22) Date of filing: 25.10.2013
(51) Int. Cl.: H04L 1/18, H04L 1/08, H04L 5/00, H04W 4/00, H04W 72/04, H04W 74/00, H04L 1/00

(54) **SYSTEM FRAME NUMBER INFORMATION TRANSMISSION METHOD, BASE STATION, TERMINAL AND SYSTEM**
ÜBERTRAGUNGSVERFAHREN FÜR SYSTEMRAHMENNUMMERNINFORMATIONEN, BASISSTATION, ENDGERÄT UND SYSTEM
PROCÉDÉ D'ÉMISSION D'INFORMATIONS DE NOMBRE DE TRAMES D'UN SYSTÈME, STATION DE BASE, TERMINAL ET SYSTÈME

(30) Priority: 29.03.2013 CN 201310110191
(43) Date of publication of application: 03.02.2016
(73) Proprietor: ZTE Corporation, Shenzhen, Guangdong 518057 (CN)
(72) Inventor: FANG, Huiying, Shenzhen Guangdong 518057 (CN); DAI, Bo, Shenzhen Guangdong 518057 (CN); SHI, Jing, Shenzhen Guangdong 518057 (CN); XIA, Shuqiang, Shenzhen Guangdong 518057 (CN); LI, Xincai, Shenzhen Guangdong 518057 (CN); LI, Shupeng, Shenzhen Guangdong 518057 (CN)
(74) Representative: Lavoix
(86) International application number: PCT/CN2013/086010
(87) International publication number: WO 2014/153954

(56) References cited:
- WO-A2-2011/014728
- CN-A- 101 505 523
- CN-A- 101 651 877
- CN-A- 101 902 692
- CN-A- 102 421 087
- RENESAS MOBILE EUROPE LTD: "Physical channels coverage enhancements for MTC", 3GPP DRAFT; R1-130423, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. St Julian; 20130128 - 20130201 19 January 2013 (2013-01-19), XP050663706, Retrieved from the Internet: URL:http://www.3gpp.org/ftp/tsg_ran/WG1_RL 1/TSGR1_72/Docs/ [retrieved on 2013-01-19]
- ALCATEL-LUCENT ET AL: "Feasibility of coverage extension of physical channels for MTC devices", 3GPP DRAFT; R1-130462 - REL-12 MTC COVERAGE - COVERAGE EXT PHY CHANNELS V0.3, 3RD GENERATION PARTNERSHIP PROJECT (3GPP), MOBILE COMPETENCE CENTRE ; 650, ROUTE DES LUCIOLES ; F-06921 SOPHIA-ANTIPOLIS C , vol. RAN WG1, no. St Julian; 20130128 - 20130201 19 January 2013 (2013-01-19), XP050663744, Retrieved from the Internet: URL:http://www.3gpp.org/ftp/tsg_ran/WG1_RL 1/TSGR1_72/Docs/ [retrieved on 2013-01-19]

## Description

### TECHNICAL FIELD

The disclosure relates to the field of wireless communications, and more particularly to a method, a base station, a terminal and a system for transmitting System Frame Number (SFN) information.

### BACKGROUND

The Machine Type Communication (MTC) User Equipment (UE), which is also called a Machine to Machine (M2M) user communication device, is a main application form of the existing Internet of things. Low power consumption and cost are the important safeguard of the large-scale application of the MTC device. Smart metering is one of the most typical applications of the MTC device, and most of the smart metering MTC devices are fixedly installed in an environment of low coverage performance, such as a basement. To ensure the normal communication between the MTC device and a base station system, the additional deployment of a site, a relay and other devices is usually needed, which may greatly increase the deployment cost of an operator absolutely. Therefore, the Vodafone and other companies require improvement of the coverage of the smart metering MTC device without additional deployment in the technical solution RP-121282 OF THE 3GPP RAN.

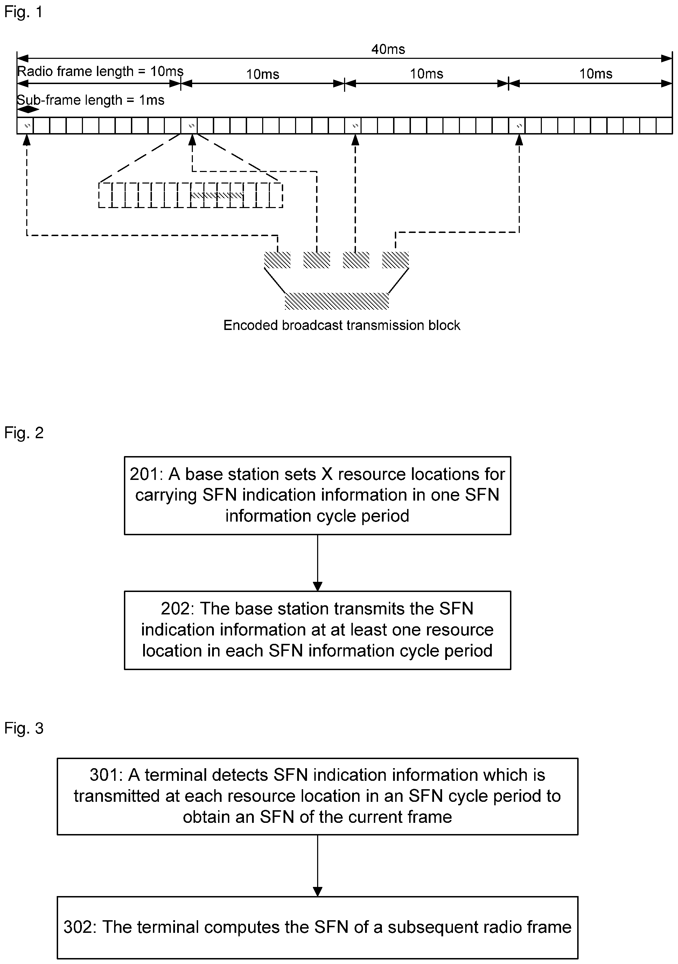

A smart metering MTC device, which mainly transmits small-packet data, has a low requirement on the data rate and can tolerate a relatively large data transmission delay. Because the smart metering MTC device has a very low requirement on the data rate, for a data channel, the correct transmission of the small-packet data can be ensured by a lower modulation encoding rate, multiple repeated transmissions in a time domain and other ways. However, for the SFN information needing to be transmitted to a terminal, the frame number information in the existing LTE system is contained in a Master Information Block (MIB) to be transmitted, and the scheduling period of transmitting the MIB is 40ms, as shown in Fig. 1, the MIB is transmitted repeatedly for four times on a broadcast channel of sub-frame 0 of each radio frame. The MIB remains unchanged within every 40ms, while the SFN of the next MIB may change, thus, the data of the broadcast channel cannot improve the coverage performance by a long-time time domain repetition. The smart metering MTC device deployed in a low-coverage environment can tolerate a large time delay, and transmission performance can be ensured for control signaling, such as resource configuration, and data transmission by multiple repeated transmission in a time domain, but the MTC device cannot communicate with a base station system normally due to the low transmission performance of the MIB. To reduce the cost of the smart metering MTC terminal device which is fixedly installed, the MTC terminal device only supports system bandwidth of 1.4MHz.

In addition, in terms of some traditional UEs in a low-coverage environment, the improved rate of correct reception of SFN information by a terminal device is the premise of ensuring the normal communication between the terminal device and a base station system.

In order to ensure the normal communication between the terminal device and the base station system by ensuring that the terminal device can receive SFN information correctly on the premise of improving the coverage performance of the terminal device which is fixedly installed in a low-coverage environment without deployment of additional relay device, it is necessary to design a new way for transmitting SFN information for a terminal device in a low-coverage environment.

3GPP DRAFT; R1-130423, 3RD GENERATION PARTNERSHIP PROJECT (3GPP), RAN WG1 Meeting #72, St Julian's, Malta, 19 January 2013 (2013-01-19), XP050663706, entitled "RENESAS MOBILE EUROPE LTD: "Physical channels coverage enhancements for MTC", discloses ways to enhance the coverage of physical channels for MTC. For PBCH (knowing that the PBCH contains the SFN) it is suggested to repeat it every 10 ms (the frame duration), or to repeat it several times during the PBCH periodicity (40 ms). For both options additional resources are needed for PBCH transmission. 3GPP DRAFT; TSG-RAN WG1 Meeting #72, R1-130462, St Julian's, Malta, 19-01-2013, XP050663744, entitled "Feasibility of coverage extension of physical channels for MTC devices" discloses methods to extend coverage of MTC. For the PBCH, it is suggested to have long periods of legacy PBCH transmission followed by shorter periods (for resources saving purposes) of intense PBCH repetitions, enabling the MTC to successfully decode the PBCH; and WO 2011/014728 A2 (QUALCOMM ING [US]; LUO TAO [US]; ZHANG XIAOXIA [US]; SEONG KIBEOM [US]) 3 February 2011 (2011-02-03) entitled "utilization of a known portion of a payload to decode a payload having a known and an unkown portion" discloses a method of PBCH transmission. The PBCH carries the 8 Most Significant Bits (MSB) of the 10 bits long SFN. Therefore the SFN is only valid in 4 consecutive frames, and the PBCH is only repeated in four consecutive framers.

### SUMMARY

In view of this, the main objective of the disclosure is to provide a method and a base station for transmitting SFN information and a method and a terminal for receiving SFN information, in order to improve the coverage performance of a smart metering MTC terminal device deployed in a low-coverage environment and ensure the normal communication requirement of the MTC terminal device without additional deployment of a site and a relay station.

A method for transmitting SFN information is provided, as recited in claim 1.

A method for receiving SFN information, as recited in claim 9.

A base station for transmitting SFN information is provided, as recited in claim 13.

A terminal for receiving SFN information is provided, as recited in claim 18.

According to the method and the base station for transmitting SFN information and the method and the terminal for receiving SFN information provided by the embodiments of the disclosure, the base station sets X resource locations for carrying SFN indication information in one SFN information cycle period, wherein one SFN information cycle period includes 1024 radio frames; the base station transmits the SFN indication information at at least one resource location in each SFN information cycle period, wherein each resource location consists of consecutive M radio frames and wherein X=2^{Y}, Y>=0 and Y<10; and M is 2, 4, 8, 16, 32 or 64; the base station further transmits the SFN indication information over K sub-frames of each of the consecutive M radio frames, where K is 1, 2, 4, 5 or 10; the consecutive M radio frames being divided into H radio frame groups, where H is an integer and 1<=H<=M; each radio frame group including L radio frames, the SFN indication information being encoded and then divided into L parts, and each part being repeatedly transmitted within one radio frame; and the terminal detects the SFN indication information which is transmitted at each resource location in the SFN information cycle period to obtain an SFN of a current frame and computes an SFN of a subsequent radio frame; thus, the coverage performance of a smart metering MTC terminal device deployed in a low-coverage environment can be improved, and the normal communication requirement of the MTC terminal device can be ensured without additional deployment of a site and a relay station.

### BRIEF DESCRIPTION OF THE DRAWINGS

Fig. 1 is a diagram showing the transmission of an MIB in the conventional art;
Fig. 2 is a diagram showing the flow of a first method for transmitting SFN information in an embodiment of the disclosure;
Fig. 3 is a diagram showing the flow of a second method for transmitting SFN information in an embodiment of the disclosure;
Fig. 4 is a diagram showing a structure of a system for transmitting SFN information in an embodiment of the disclosure;
Fig. 5 is a diagram showing the repeated transmission of SFN indication information over radio frames at an interval of an SFN cycle period in a Frequency Division Duplexing (FDD) system in an embodiment of the disclosure;
Fig. 6 is a diagram showing the repeated transmission of SFN indication information over radio frames at an interval of an SFN cycle period in a Time Division Duplexing (TDD) system in an embodiment of the disclosure;
Fig. 7 is a diagram showing the repeated transmission of SFN indication information over each radio frame in an SFN cycle period in an embodiment of the disclosure;
Fig. 8 is a diagram showing the repeated transmission of SFN indication information over single radio frames at an interval of 2^{10-Y} (0<Y<10) in an FDD system in an embodiment of the disclosure;
Fig. 9 is a diagram showing the repeated transmission of SFN indication information over single radio frames at an interval of 2^{10-Y} (0<Y<10) in a TDD system in an embodiment of the disclosure;
Fig. 10 is a diagram showing resource locations for repeatedly transmitting SFN indication information on consecutive 2, 4, or 8 radio frames at an interval of 2^{10-Y} (0<Y<10) in an embodiment of the disclosure;
Fig. 11 is a diagram showing the symbol level of resources transmitted by a base station for repeatedly transmitting SFN indication information over consecutive multiple radio frames in an FDD system in an embodiment of the disclosure; and
Fig. 12 is a diagram showing the symbol level of resources transmitted by a base station for repeatedly transmitting SFN indication information over consecutive multiple radio frames in a TDD system in an embodiment of the disclosure.

### DETAILED DESCRIPTION

In the embodiments, a base station sets X resource locations for carrying SFN indication information in one SFN information cycle period; the base station transmits the SFN indication information at at least one resource location in each SFN information cycle period; and a terminal detects the SFN indication information which is transmitted at each resource location in an SFN cycle period to obtain an SFN of a current frame and computes an SFN of a subsequent radio frame.

The disclosure is preferably described below through the drawings and embodiments in detail.

An embodiment of the disclosure implements a method for transmitting SFN information, as shown in Fig. 2, the method includes the following steps:
Step 201: A base station sets X resource locations for carrying SFN indication information in an SFN information cycle period.

Here, each resource location consists of a single radio frame or consecutive M radio frames; the M is 2, 4, 8, 16, 32 or 64; and X=2^{Y}, Y >= 0 and Y<= 10.

The step may further include: when X=1, in one SFN information cycle period, the base station sets one resource location for carrying SFN indication information, and in two adjacent SFN cycle periods, the interval between resource locations for transmitting SFN indication information is set to be equal to the SFN cycle period, which has a length of 1024 radio frames; and
when X=1024 and the cycle period is 1024, in one SFN cycle period, the resource location for carrying the SFN indication information is set to be all the radio frames in the SFN cycle period, and each resource location is set to correspond to one radio frame.

Preferably, when 0<Y<10, the initial radio frame numbers of X resource locations are allocated at an equal interval in the SFN cycle period; and the interval between resource locations is: a fixed radio frame interval P=2^{10-Y}, where Y is generally less than or equal to 5.

Step 202: The base station transmits the SFN indication information at at least one resource location in each SFN information cycle period.

Here, the SFN indication information is the MIB of an LTE system or other indication information containing an SFN; and the other indication information containing an SFN includes: indication information only including an SFN, or indication information including an SFN and repetition times of a system message, or indication information including an SFN and repetition times of a control channel, or indication information including an SFN, repetition times of a system message and repetition times of a control channel.

The step may further include: the SFN indication information is encoded and then transmitted at the resource location; or, the SFN indication information is mapped into a predefined sequence, and the sequence corresponding to the SFN indication information is transmitted at the resource location.

Preferably, when 0<Y<10 and each resource location consists of a single radio frame, the base station repeatedly transmits the SFN indication information over single radio frames at an interval of P=2^{10-Y} radio frames.

Generally, the base station transmits the indication information including an SFN over a radio frame with an SFN of 2^{10-Y}-1, 2^{11-Y}-1, ..., 1023.

Preferably, the SFN indication information is transmitted over K sub-frames of each of the consecutive M radio frames, where K is 1, 2, 4, 5 or 10.

Preferably, an enhanced broadcast channel bearing the SFN indication information is transmitted within the K sub-frames, wherein two or four OFDM symbols in one sub-frame, or all the available OFDM symbols in one time slot, or all the available symbols except the first three symbols in one sub-frame, or all the available OFDM symbols in one sub-frame are used for transmitting the enhanced broadcast channel.

Preferably, the consecutive M radio frames are divided into H radio frame groups, and different radio frame groups correspond to different scrambling codes, where H is an integer more than or equal to 1 and less than or equal to M.

Each radio frame group includes L radio frames, the SFN indication information is encoded and then divided into L parts, and each part is repeatedly transmitted within one radio frame.

The step may further include: the base station divides the SFN indication information into two parts, and the two parts of information are transmitted on different channels respectively. For example, the higher n bits of the SFN indication information are taken as a first part, and the remaining bits are taken as a second part; or, the lower n bits of the SFN indication information are taken as a first part, and the remaining bits are taken as a second part; the first part is transmitted in a System Information Block (SIB) or in an enhanced Physical Downlink Control Channel (e-PDCCH), and the second part is transmitted on an enhanced Physical Broadcast Channel (ePBCH); or, the first part is transmitted on a primary ePBCH, and the second part is transmitted on a secondary ePBCH; or, the first part is transmitted on an ePBCH, and the second part is transmitted on a Physical Downlink Shared Channel (PDSCH).

Based on the method, an embodiment of the disclosure may further provide a method for transmitting SFN information, as shown in Fig. 3, the method includes Step 301.

Step 301: A terminal detects SFN indication information which is transmitted at each resource location in an SFN cycle period to obtain an SFN of the current frame, wherein
X resource locations for carrying SFN indication information are set in an SFN information cycle period.

Specifically, when X=1, the terminal acquires the SFN indication information which is repeatedly transmitted over single radio frames at an interval of 1024 radio frames by blind detection in each SFN cycle period; and
when X=1024 and the cycle period is 1024, the terminal detects the SFN indication information transmitted over each radio frame to acquire the SFN indication information.

When the SFN indication information is encoded and then transmitted at the resource location, the terminal carries out decoding according to a corresponding encoding method; or, when the SFN indication information is mapped into a predefined sequence and the sequence corresponding to the SFN indication information is transmitted at the resource location, the terminal carries out detection according to the corresponding sequence.

When each resource location consists of consecutive M radio frames, the terminal carries out detection by taking the consecutive M radio frames as a unit, specifically, when each resource location consists of consecutive M radio frames and is at an interval of P=2^{10-Y} radio frames, where 0<Y<10, the terminal detects the MIB of an LTE system repeatedly transmitted over consecutive M radio frames at an interval of 2^{10-Y} radio frames, and combines the MIB of the LTE system with the MIB received from a traditional broadcast message for decoding to obtain the SFN.

Preferably, when the consecutive M radio frames are divided into H radio frame groups, the terminal carries out decoding according to a scrambling code sequence corresponding to each radio frame group.

Preferably, when the SFN indication information is encoded and then divided into L parts, the terminal carries out decoding according to the dividing way of the SFN indication information.

When the SFN indication information is divided into two parts, the terminal carries out decoding according to a channel corresponding to each part to acquire the SFN indication information.

The method further includes Step 302: the terminal computes the SFN of a subsequent radio frame.

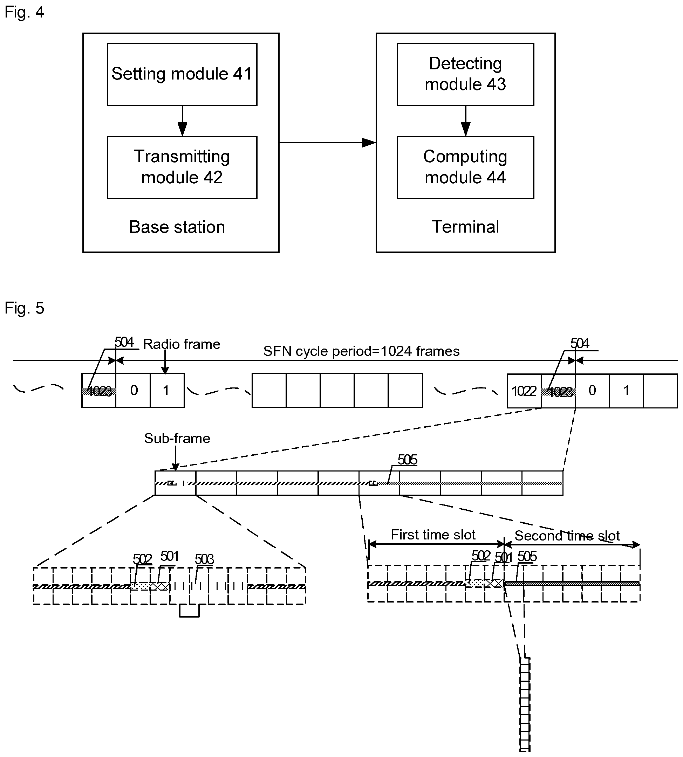

To implement the method, an embodiment of the disclosure provides a base station. As shown in Fig. 4, the base station includes a setting module 41 and a transmitting module 42, wherein
the setting module 41 is configured to set X resource locations for carrying SFN indication information in one SFN information cycle period;
the transmitting module 42 is configured to transmit SFN indication information at at least one resource location in each SFN information cycle period; and
the setting module 41 and the transmitting module 42 can be implemented by a Central Processing Unit (CPU), a Digital Signal Processor (DSP) or a Field Programmable Gate Array (FPGA) in the base station.

Here, each resource location consists of a single radio frame or consecutive M radio frames; the M is 2, 4, 8, 16, 32 or 64; and X=2^{Y}, Y >= 0 and Y<= 10.

The setting module 41 is specifically configured to: when X=1, in one SFN cycle period, set one resource location for carrying the SFN indication information, and in two adjacent SFN cycle periods, set the interval between resource locations for transmitting the SFN indication information to be equal to the SFN cycle period, which has a length of 1024 radio frames.

The SFN indication information includes an indicating sequence or encoding information.

The setting module 41 is specifically configured to: when X=1024 and the cycle period is 1024, in one SFN cycle period, set the resource location for carrying the SFN indication information to be all the radio frames in the SFN cycle period and set each resource location to correspond to one radio frame.

Preferably, when 0<Y<10, the initial radio frame numbers of the X resource locations are allocated at an equal interval in the SFN cycle period.

The transmitting module 42 is specifically configured to: when 0<Y<10 and each resource location consists of a single radio frame, repeatedly transmit the SFN indication information over single radio frames at an interval of P=2^{10-Y} radio frames.

The transmitting module 42 is specifically configured to encode the SFN indication information and transmit the encoded SFN indication information at the resource location; or, map the SFN indication information into a predefined sequence, and transmit the sequence corresponding to the SFN indication information at the resource location.

The SFN indication information is the MIB of an LTE system or other indication information containing an SFN; and the other indication information containing an SFN includes: indication information only including an SFN, or indication information including an SFN and repetition times of a system message, or indication information including an SFN and repetition times of a control channel, or indication information including an SFN, repetition times of a system message and repetition times of a control channel.

The transmitting module 42 is specifically configured to transmit the SFN indication information over K sub-frames of each of the consecutive M radio frames, where K is 1, 2, 4, 5 or 10.

The transmitting module 42 is further configured to transmit an enhanced broadcast channel bearing the SFN indication information in the K sub-frames, wherein two or four OFDM symbols in one sub-frame, or all the available OFDM symbols in one time slot, or all the available symbols except the first three symbols in one sub-frame, or all the available OFDM symbols in one sub-frame are used for transmitting the enhanced broadcast channel.

The transmitting module 42 is further configured to: divide the consecutive M radio frames into H radio frame groups, wherein different radio frame groups correspond to different scrambling codes, and H is an integer more than or equal to 1 and less than or equal to M.

Each radio frame group includes L radio frames, the SFN indication information is encoded and then divided into L parts, and each part is repeatedly transmitted in one radio frame.

The transmitting module 42 is further configured to divide the SFN indication information into two parts, and the two parts of information are transmitted on different channels respectively.

One embodiment of the disclosure further provides a terminal, as shown in Fig. 4, including:
a detecting module 43, which is configured to detect SFN indication information which is transmitted at each resource location in an SFN cycle period to obtain an SFN of the current frame, wherein
X resource locations for carrying SFN indication information are set in one SFN information cycle period.

The terminal may further include a computing module 44, which is configured to compute the SFN of a subsequent radio frame.

The detecting module 43 and the computing module 44 can be implemented by a CPU, a DSP or an FPGA.

The detecting module 43 is specifically configured to, when X=1, acquire the SFN indication information at an interval of 1024 radio frames by blind detection in each SFN cycle period.

The detecting module 43 is specifically configured to: when X=1024 and the cycle period is 1024, detect the SFN indication information transmitted over each radio frame to acquire the SFN indication information.

The detecting module 43 is specifically configured to: when the SFN indication information is encoded and then transmitted at the resource location, carry out decoding according to a corresponding encoding method, or, when the SFN indication information is mapped into a predefined sequence and the sequence corresponding to the SFN indication information is transmitted at the resource location, carry out detection according to the corresponding sequence.

The detecting module 43 is specifically configured to: when each resource location consists of consecutive M radio frames, carry out detection with the consecutive M radio frames as a unit.

The detecting module 43 is further configured to: when the consecutive M radio frames are divided into H radio frame groups, carry out decoding according to a scrambling code sequence corresponding to each radio frame group.

The detecting module 43 is further configured to: when the SFN indication information is encoded and then divided into L parts, carry out decoding according to the dividing way of the SFN indication information.

The detecting module is further configured to: when the SFN indication information is divided into two parts, carry out decoding according to the channel corresponding to each part to acquire the SFN indication information.

An embodiment of the disclosure further provides a system for transmitting SFN information, as shown in Fig. 4, including the base station and the terminal.

The process and principle of the implementation of the steps of this disclosure are specified with the following detailed embodiments.

### First embodiment

In the embodiment, the scenario of repeatedly transmitting SFN indication information over a sub-frame of single radio frames at an interval of an SFN cycle period in an FDD or a TDD system is mainly described.

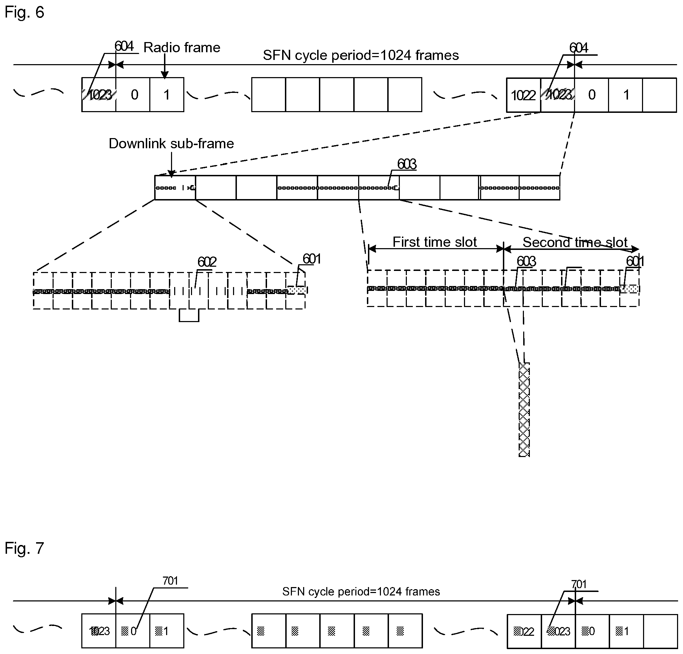

As shown in Fig. 2, the specific processing step on a base station side includes:
Step 201: A base station sets X resource locations for carrying SFN indication information in an SFN information cycle period;
here, each resource location consists of a single radio frame; as shown in Figs. 5 and 6, in one SFN cycle period, the base station sets one resource location for carrying SFN indication information, and in two adjacent SFN cycle periods, the base station sets the interval between resource locations for transmitting SFN indication information to be equal to the SFN cycle period, which has a length of 1024 radio frames; and
Step 202: The base station transmits the SFN indication information at at least one resource location in each SFN information cycle period, and the SFN indication information includes an SFN corresponding to the resource location.

The method for transmitting SFN indication information may include: the SFN indication information is encoded and then transmitted at the resource location; or, the SFN indication information is mapped into a pre-defined sequence, and the sequence corresponding to the SFN indication information is transmitted at the resource location.

As shown in Figs. 4 and 5, the base station repeatedly transmits the SFN indication information over a radio frame 504 or 604 with an SFN of 1023, and the SFN indication information includes the SFN corresponding to the radio frame 504 or 604.

The SFN indication information is mapped into a predefined sequence or encoding information, the sequence may be an m sequence, a CAZAC sequence and the like, and the sequence occupies less than or equal to 72 subcarriers in a frequency domain.

In the embodiment shown in Fig. 5 or 6, the known indicating sequence 505 or 603 or the encoding information corresponds to the SFN 1023; as shown in Fig. 5, in an FDD system, the base station can repeatedly transmit the SFN indication information over all the symbols of a single radio frame except a primary synchronous symbol 501, a secondary synchronous symbol 502 and the symbol 503 where a broadcast channel is located; and as shown in Fig. 6, in a TDD system, the base station can repeatedly transmit the SFN indication information over all the symbols of all the downlink sub-frames of a single radio frame except a secondary synchronous symbol 601 and the symbol 602 where the broadcast channel is located.

As shown in Fig. 3, the processing step on a terminal side includes:
Step 301: A terminal detects SFN indication information which is transmitted at each resource location in an SFN cycle period to obtain an SFN of the current frame.

As shown in Fig. 5, the base station repeatedly transmits the indication information containing an SFN over a radio frame 504 or 604 with the SFN of 1023, and maps the repeatedly transmitted SFN indication information into a predefined sequence or encoding information; and the terminal detects the repeatedly transmitted sequence or the encoding information and determines that the current SFN is 1023.

Step 302: Before acquiring a next SFN, the terminal computes the SFN of a subsequent radio frame according to own timing.

In the embodiment, by transmitting the SFN indication information repeatedly and densely over the radio frame where the SFN is located before its cycle period jumps, the synchronization of SFN information between an MTC terminal device and a base station side in a low-coverage environment can be ensured on the premise of reducing the system overhead, and the normal communication requirement of the MTC terminal device can be ensured.

### Second embodiment

In the embodiment, the scenario of repeatedly transmitting SFN indication information over each radio frame in an SFN cycle period in an FDD or a TDD system is described.

As shown in Fig. 2, the specific processing step on a base station side includes:
Step 201: A base station sets X resource locations for carrying the SFN indication information in an SFN information cycle period.

Here, each resource location consists of a single radio frame; as shown in Fig. 7, in one SFN information cycle period, the base station sets 1024 resource locations 701 for carrying SFN indication information, namely, the resource locations 701 are on respective radio frames in the SFN cycle period.

Step 202: The base station transmits the SFN indication information at at least one resource location in each SFN information cycle period, and the SFN indication information includes the SFN corresponding to each resource location.

As shown in Fig. 7, the base station repeatedly transmits the SFN indication information on each radio frame; the SFN indication information includes the SFN corresponding to each radio frame; the SFN indication information may be the MIB of a traditional LTE system, and other indication information containing an SFN; and the other indication information containing an SFN may be SFN information, or the combination information of an SFN and repetition times of a system message/a control message.

As shown in Fig. 3, the processing step on a terminal side includes:
Step 301: A terminal detects SFN indication information which is transmitted at each resource location in an SFN cycle period to obtain an SFN of the current frame.

Here, if the SFN indication information transmitted repeatedly is the MIB of a traditional LTE system, the terminal combines the detected SFN indication information with the MIB received from a traditional broadcast message for decoding to obtain the SFN.

Step 302: Before acquiring a next SFN, the terminal computes the SFN of a subsequent radio frame according to own timing.

In the embodiment, by additionally adding low-density repeatedly-transmitted SFN indication information to each radio frame in an SFN cycle period, the synchronization performance of SFN information between an MTC terminal device and a base station side in a low-coverage environment is improved without increasing the system overhead obviously.

### Third embodiment

In the embodiment, the scenario of repeatedly transmitting SFN indication information over single radio frames at an interval of 2^{10-Y} (0<Y<10) radio frames is mainly described in an FDD system or a TDD system.

As shown in Fig. 2, the specific processing step of a base station side includes:
Step 201: A base station sets X resource locations for carrying SFN indication information in an SFN information cycle period.

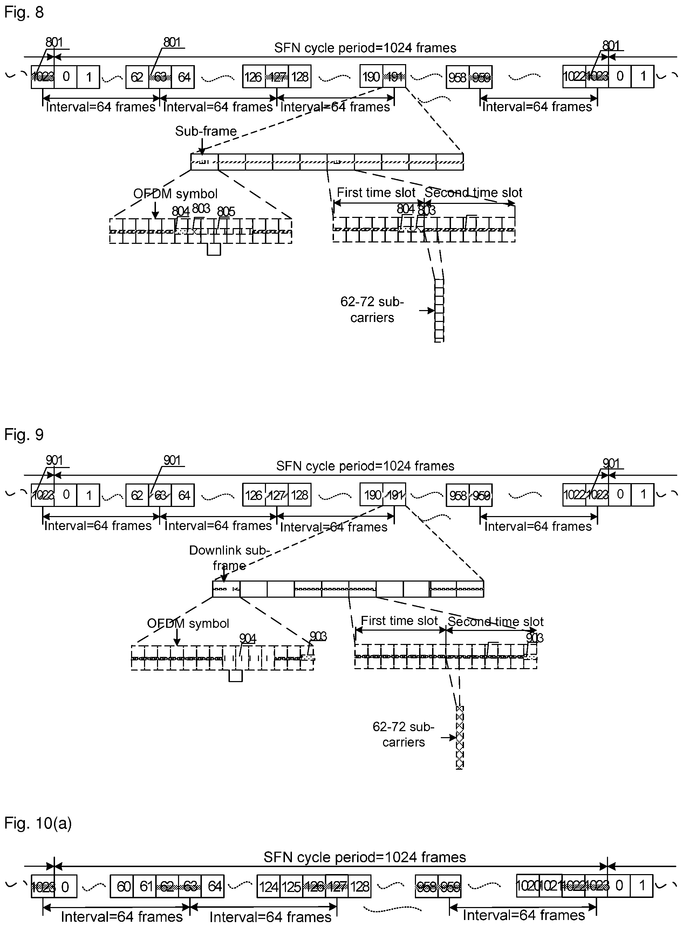

Here, each resource location consists of a single radio frame; as shown in Figs. 8 and 9, X=2^{Y}=16, 16 resource locations for carrying SFN indication information are allocated at an equal interval in an SFN cycle period, and the interval between resource locations is a preset fixed radio frame internal, i.e., P=2^{10-Y}=64 radio frames.

Step 202: The base station transmits the SFN indication information at at least one resource location in each SFN information cycle period, and the SFN indication information includes an SFN corresponding to the resource location.

As shown in Figs. 8 and 9, the base station repeatedly transmits the SFN indication information over radio frames with SFNs of 63, 127, 191,..., 895, 959 and 1023; as shown in Fig. 8, in an FDD system, the base station can repeatedly transmit the SFN indication information on all the symbols of a radio frame 801 except a primary synchronous symbol 803, a secondary synchronous symbol 804 and the symbol 805 where a broadcast channel is located; and as shown in Fig. 9, in a TDD system, the base station can repeatedly transmit the SFN indication information on all the symbols of all the downlink sub-frames (except special sub-frames) of the radio frame 901 except a secondary synchronous symbol 903 and the symbol 904 where the broadcast channel is located.

The method for transmitting SFN indication information may include: the SFN indication information is encoded and then transmitted at the resource location; or, the SFN indication information is mapped into a pre-defined sequence, and the sequence corresponding to the SFN indication information is transmitted at the resource location.

The mapping relationship between the SFN and the sequence/SFN indication information (information source corresponding to the encoding) is predefined, as shown in Table 1.

**Table 1**

| Number of resource location | Sequence/SFN indication information | Represented SFN information |
|---|---|---|
| 0 | 1 | SFN=D/X-1 |
| 1 | 2 | SFN=2*D/X-1 |
| ... | | |
| X | x+1 | SFN=(x+1)*D/X-1 |
| ... | | |
| X-1 | X | SFN=D-1 |

As shown in Fig. 3, the processing step on a terminal side includes:
Step 301: A terminal detects SFN indication information which is transmitted at each resource location in an SFN information cycle period to obtain an SFN of the current frame.

As shown in Figs. 8 and 9, the interval between resource locations is a preset fixed radio frame interval, i.e., P=2^{10-Y}=64 radio frames; the terminal detects the SFN indication information which is repeatedly transmitted on radio frames with SFNs of 63, 127, 191,...,895, 959 and 1023 to obtain the SFN of the current radio fame according to a predefined mapping relationship between the SFN and the sequence/SFN indication information in Table 1.

Step 302: Before acquiring a next SFN, the terminal computes the SFN of a subsequent radio frame according to own timing.

In the embodiment, by transmitting the SFN indication information repeatedly and densely over single radio frames at an interval of 2^{10-Y} (0<Y<10) radio frames, the synchronization of SFN information between an MTC terminal device and a base station side in a low-coverage environment can be ensured on the premise of reducing the system overhead without influencing the time delay of synchronizing the SFN of the terminal obviously, and the normal communication requirement of the MTC terminal device can be ensured.

### Fourth embodiment

In the embodiment, the scenario of repeatedly transmitting SFN indication information over consecutive multiple radio frames at an interval of 2^{10-Y} (0<Y<10) radio frames is mainly described in an FDD or a TDD system.

As shown in Fig. 2, the specific processing step of a base station side includes:
Step 201: A base station sets X resource locations for carrying SFN indication information in an SFN information cycle period.

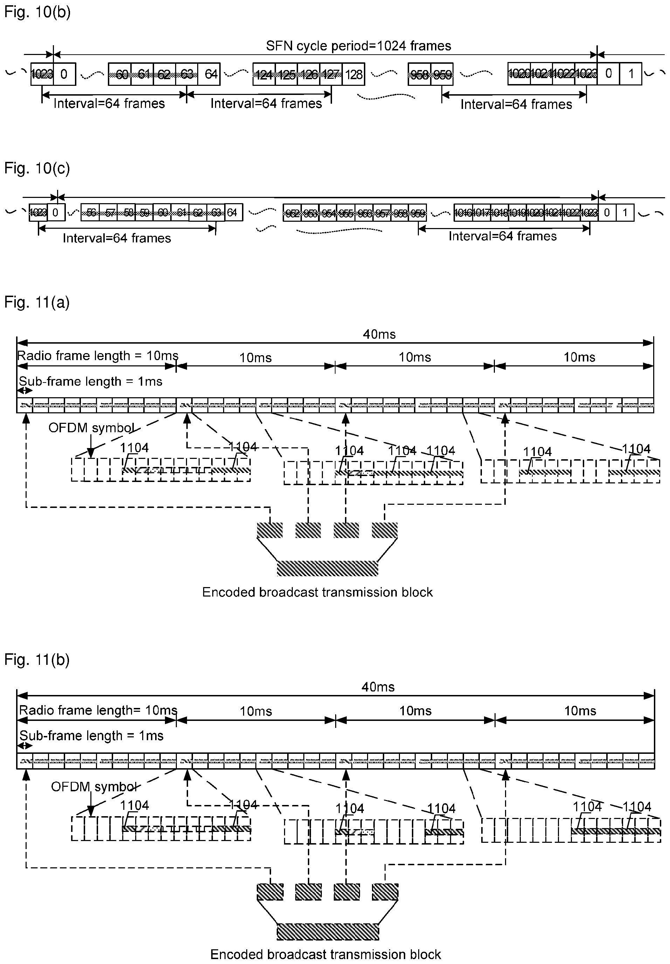

Here, each resource location consists of consecutive M radio frames, M is preferably 2, 4 or 8; as shown in Fig. 10, X=2^{Y}=16, 16 resource locations for carrying SFN indication information are allocated at an equal interval in an SFN cycle period; the interval between resource locations has a length of preset fixed radio frames, i.e., P=2^{10-Y}=64 radio frames; when M=2, as shown in Fig. 10 (a), the base station repeatedly transmits the SFN indication information over radio frames with SFNs of 62, 63, 126, 127, 190, 191,......, 894, 895, 958, 959, 1022 and 1023; when M=4, as shown in Fig. 10(b), the base station repeatedly transmits the SFN indication information over radio frames with SFNs of 60, 61, 62, 63, 124, 125, 126, 127, 188, 189, 190, 191, ......, 892, 893, 894, 895, 956, 957, 958, 959, 1020, 1021, 1022 and 1023; and when M=8, as shown in Fig. 10(c), the base station repeatedly transmits the SFN indication information over radio frames with SFNs of 56, 57, 58, 59, 60, 61, 62, 63, 120, 121, 122, 123, 124, 125, 126, 127, 184, 185, 186, 187, 188, 189, 190, 191,......, 952, 953, 954, 955, 956, 957, 958, 959, 1016, 1017, 1018, 1019, 1020, 1021, 1022 and 1023.

Step 202: The base station transmits the SFN indication information at at least one resource location in each SFN information cycle period, and the SFN indication information includes the SFN corresponding to the resource location.

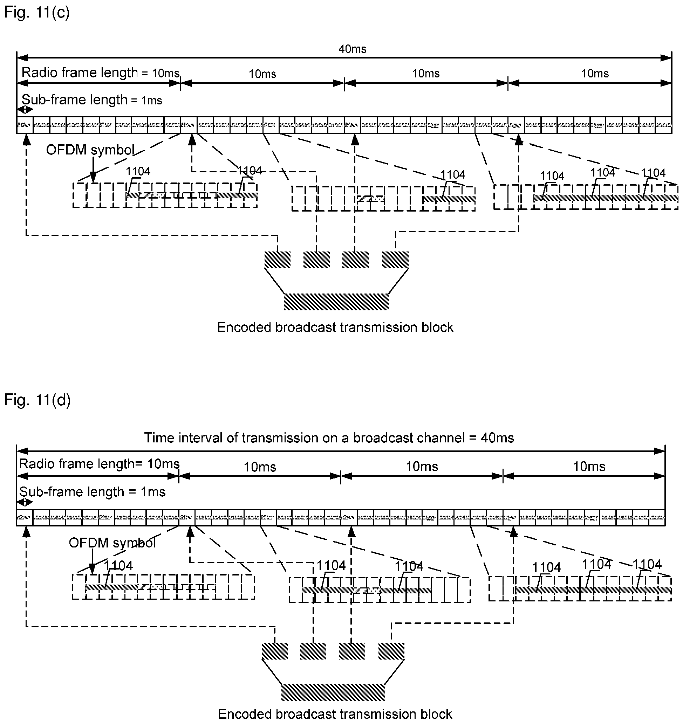

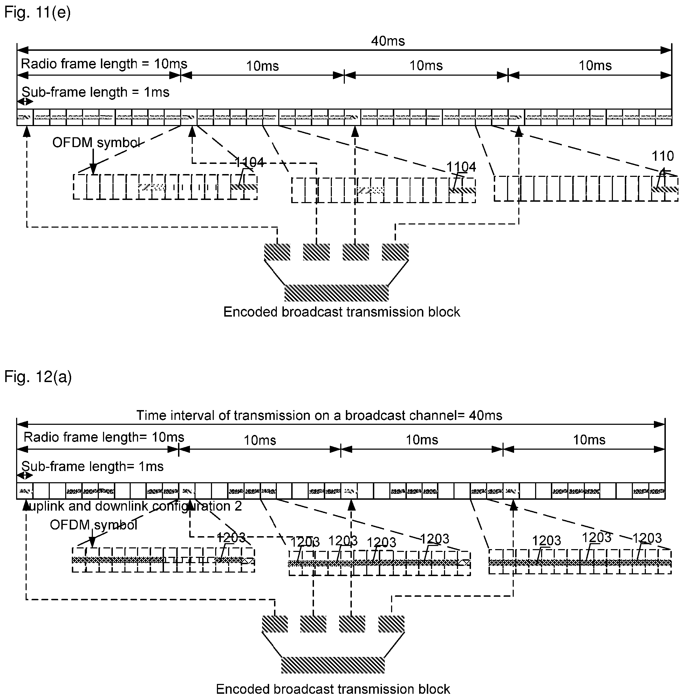

Specifically, each resource location consists of consecutive M radio frames, the base station transmits the SFN indication information over K sub-frames of each of the M radio frames, and for an FDD system, K is preferably 1, 2, 4, 5 or 10; preferably, an enhanced broadcast channel for bearing the SFN indication information is transmitted over the K sub-frames, and two or four OFDM symbols in one sub-frame, or all the available OFDM symbols in one time slot, or all the available symbols except the first three symbols in one sub-frame, or all the available OFDM symbols in one sub-frame are used for transmitting the enhanced broadcast channel; and in an FDD system, the example of OFDM symbol level resources occupied by a typical enhanced broadcast channel is as shown in Fig. 11, but is not limited to the example in Fig. 11, wherein
the OFDM symbol level-resources occupied by the enhanced broadcast channel are as shown in Fig. 11 (a); in the sub-frame #0, the enhanced broadcast channel 1104 occupies the central six Resource Blocks (RBs) of the last three OFDM symbols of a second time slot and the third OFDM symbol from the end of a first time slot; in the sub-frame #5, the enhanced broadcast channel occupies the central six RBs of the first four OFDMs of the second time slot, and in other sub-frames, the enhanced broadcast channel occupies the central six RBs of the last four OFDM symbols of the second time slot and the last four OFDM symbols of the first time slot; or,
the OFDM symbol resources occupied by the enhanced broadcast channel are as shown in Fig. 11 (b); in the sub-frames #0 and #5, the enhanced broadcast channel occupies the central six RBs of the last three OFDM symbols of the second time slot and the third OFDM symbol from the end of the first time slot, and in other sub-frames, the enhanced broadcast channel occupies the central six RBs of all the OFDM symbols of the second time slot; or,
the OFDM symbol resources occupied by the enhanced broadcast channel are as shown in Fig. 11 (c); in the sub-frames #0 and #5, the enhanced broadcast channel occupies the central six RBs of the last three OFDM symbols of the second time slot and the third OFDM symbol from the end of the first time slot, and in other sub-frames, the enhanced broadcast channel occupies the central six RBs of all the OFDM symbols except the first three symbols; or,
the OFDM symbol resources occupied by the enhanced broadcast channel are as shown in Fig. 11 (d); in the sub-frame #0, the enhanced broadcast channel occupies the central six RBs of the first to the fifth OFDM symbols of the first time slot; in the sub-frame #5, the enhanced broadcast channel occupies the central six RBs of the first four OFDM symbols of the second time slot; and in other sub-frames, the enhanced broadcast channel occupies the central six RBs of all the OFDM symbols except the first two symbols; or,
the OFDM symbol resources occupied by the enhanced broadcast channel are as shown in Fig. 11 (e); in all the sub-frames, the enhanced broadcast channel occupies the central six RBs of the last two OFDM symbols.

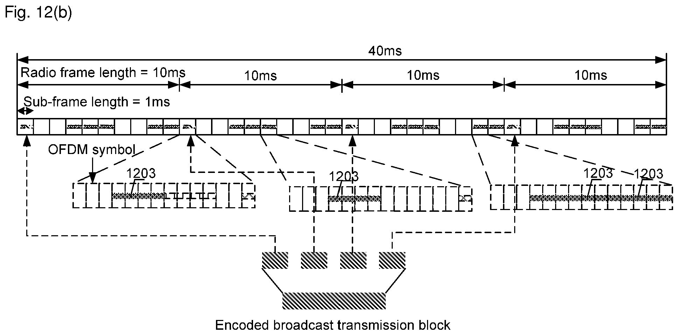

In a TDD system, the OFDM symbol level-resources occupied by different enhanced broadcast channels can be selected according to the different number of the consecutive M radio frames; for uplink and downlink configuration 2, the OFDM symbol resources occupied by the enhanced broadcast channel can be selected from the enhanced broadcast channel resources shown in Fig. 12(a); as shown in Fig. 12(b), the OFDM symbol resources occupied by the enhanced broadcast channel occupy the central six RBs of the last four OFDM symbols of the first time slot in the sub-frames #0 and #5 and occupy all the OFDM symbols except the first three symbols in other downlink sub-frames.

The M radio frames are divided into H (1 <=H<=M) radio frame group(s), and different radio frames correspond to different scrambling codes; each radio frame group includes L radio frames, the SFN indication information is encoded and then divided into L parts, and each part is repeatedly transmitted in one radio frame; the SFN indication information repeatedly transmitted over the radio frame can be the MIB of a traditional LTE system or the combined information of an SFN and repetition times of a system message/a control message; as shown in Fig. 11, in an FDD system, the SFN indication information is repeatedly transmitted on an enhanced broadcast channel 1104 of the radio frame; and as shown in Fig. 12, in a TDD system, the SFN indication information is repeatedly transmitted on an enhanced broadcast channel 1203 of the radio frame.

If each resource location consists of two or four consecutive M radio frames, the SFN indication information transmitted repeatedly may be the MIB of the traditional LET system or other indication information containing an SFN; and the other indication information containing an SFN can be SFN information or the combined information of the SFN and repetition times of a system message/a control message; and if each resource location consists of eight consecutive M radio frames, the SFN indication information transmitted repeatedly contains an SFN of seven bits.

In addition, the SFN indication information may further contain information about repetition times of a system message or a control message, wherein seven bits can be encoded according to eight parts of resources; then, the encoded seven bits are divided into eight parts, each of which is transmitted repeatedly in one radio frame; or, the seven bits can be encoded according to four parts of resources, then, the encoded seven bits are divided into four parts, each of which is transmitted repeatedly in one radio frame; in addition, the scrambling codes corresponding to the first four radio frames in the eight radio frames are different from that corresponding to the last four radio frames.

As shown in Fig. 3, the processing step for a terminal side includes:
Step 301: A terminal detects SFN indication information which is repeatedly transmitted at each resource location in an SFN information cycle period to obtain an SFN of the current frame.

As shown in Fig. 10(a), the base station repeatedly transmits the SFN indication information over radio frames with SFNs of 62, 63, 126, 127, 190, 191,......, 894, 895, 958, 959, 1022 and 1023; or, as shown in Fig. 10(b), the base station repeatedly transmits the SFN indication information over radio frames with SFNs of 60, 61, 62, 63, 124, 125, 126, 127, 188, 189, 190, 191, ......, 892, 893, 894, 895, 956, 957, 958, 959, 1020, 1021, 1022 and 1023; or, as shown in Fig. 10(c), the base station repeatedly transmits the SFN indication information over radio frames with SFNs of 56, 57, 58, 59, 60, 61, 62, 63, 120, 121, 122, 123, 124, 125, 126, 127, 184, 185, 186, 187, 188, 189, 190, 191,......, 952, 953, 954, 955, 956, 957, 958, 959, 1016, 1017, 1018, 1019, 1020, 1021, 1022 and 1023; and if the SFN indication information is the MIB of a traditional LTE system, the terminal combines the detected SFN indication information with the MIB received from a traditional broadcast message and decodes the combined information to obtain an SFN.

Step 302: Before acquiring a next SFN, the terminal computes the SFN of a subsequent radio frame according to own timing.

In the embodiment, by transmitting the SFN indication information repeatedly and densely over consecutive multiple radio frames at an interval of 2^{10-Y} (0<Y<10) radio frames, the synchronization of SFN information between an MTC terminal device and a base station side in a low-coverage environment can be ensured on the premise of reducing the system overhead without influencing the time delay of synchronizing the SFN of the terminal obviously, and the normal communication requirement of the MTC terminal device can be ensured.

As seen above, according to the method for transmitting the SFN information provided by the embodiment of the disclosure, by transmitting high-density SFN indication information discontinuously or transmitting low-density SFN indication information continuously, the coverage performance of a smart metering MTC terminal device deployed in a low-coverage environment is improved on the premise of ensuring the system overhead, and the normal communication requirement of the MTC terminal device is ensured on the premise of ensuring no additional addition of a site and a relay station.

The above are only the preferred embodiments of the disclosure, and are not intended to limit the scope of protection of the claims of the disclosure.

## Claims

1. A method for transmitting System Frame Number, SFN, information, comprising:
setting (201), by a base station, X resource locations for carrying SFN indication information in one SFN information cycle period, wherein one SFN information cycle period includes 1024 radio frames; and
transmitting (202), by the base station, the SFN indication information at least one resource location in each SFN information cycle period;
wherein each resource location consists of consecutive M radio frames;
wherein X=2^{Y}, Y >= 0 and Y< 10; and the M is 2, 4, 8, 16, 32 or 64;
further comprising: transmitting the SFN indication information over K sub-frames of each of the consecutive M radio frames, where K is 1, 2, 4, 5 or 10;
**characterized in that**:
the consecutive M radio frames are divided into H radio frame groups, where H is an integer and 1<=H<=M;
each radio frame group includes L radio frames, the SFN indication information is encoded and then divided into L parts, and each part is repeatedly transmitted within one radio frame.

2. The method according to claim 1,
further comprising: when X=1024 and the SFN information cycle period is 1024, in the SFN information cycle period, setting the resource location for carrying the SFN indication information to be all the radio frames in the SFN information cycle period, and setting each resource location to correspond to one radio frame;
or,
further comprising: encoding the SFN indication information and transmitting the encoded SFN indication information at the resource location; or, mapping the SFN indication information into a predefined sequence, and transmitting the predefined sequence corresponding to the SFN indication information at the resource location;
or,
further comprising: dividing, by the base station, the SFN indication information into two parts, and transmitting the two parts of information over different channels respectively.

3. The method according to claim 1, wherein when 0<Y<10, initial radio frame numbers of the X resource locations are allocated at an equal interval in the SFN information cycle period.

4. The method according to claim 3, further comprising:
when 0<Y<10 and each resource location consists of a single radio frame, repeatedly transmitting, by the base station, the SFN indication information over single radio frames at an interval of P=2^{10-Y} radio frames.

5. The method according to claim 1, wherein the SFN indication information is a Master Information Block, MIB, of a Long Term Evolution, LTE, system, or indication information containing an SFN.

6. The method according to claim 5, wherein the indication information containing an SFN comprises:
indication information only comprising an SFN, or
indication information comprising an SFN and repetition times of a system message, or
indication information comprising an SFN and repetition times of a control channel, or
indication information comprising an SFN, repetition times of a system message and repetition times of a control channel.

7. The method according to claim 1, further comprising:
transmitting an enhanced broadcast channel bearing the SFN indication information in the K sub-frames, wherein two or four Orthogonal Frequency Division Multiplexing, OFDM, symbols in one sub-frame, or all available OFDM symbols in one time slot, or all available symbols except the first three symbols in one sub-frame, or all available OFDM symbols in one sub-frame are used for transmitting the enhanced broadcast channel.

8. The method according to claim 1, further comprising:
wherein different radio frame groups correspond to different scrambling codes, and H is an integer more than or equal to 1 and less than or equal to M.

9. A method for receiving System Frame Number, SFN, information, comprising:
detecting (301), by a terminal, SFN indication information which is transmitted at at least one resource location in an SFN information cycle period to obtain an SFN of a current frame, wherein X resource locations for carrying the SFN indication information are set in one SFN information cycle period;
wherein one SFN information cycle period includes 1024 radio frames;
wherein each resource location consists of consecutive M radio frames;
wherein X=2^{Y}, Y >= 0 and Y< 10; and the M is 2, 4, 8, 16, 32 or 64;
further comprising: receiving the SFN indication information over K sub-frames of each of the consecutive M radio frames, where K is 1, 2, 4, 5 or 10;
when each resource location consists of consecutive M radio frames, carrying out detection, by the terminal, with the consecutive M radio frames as a unit;
**characterized in that**:
the consecutive M radio frames are divided into H radio frame groups, where H is an integer and 1<=H<=M;
each radio frame group includes L radio frames, the SFN indication information is encoded and then divided into L parts, and each part is repeatedly transmitted within one radio frame.

10. The method according to claim 9, further comprising: when X=1024 and the SFN information cycle period is 1024, detecting, by the terminal, the SFN indication information transmitted over each radio frame to acquire the SFN indication information;
or,
further comprising: when the SFN indication information is encoded and then transmitted at the resource location, carrying out decoding, by the terminal, according to a corresponding encoding method; or, when the SFN indication information is mapped into a predefined sequence and the sequence corresponding to the SFN indication information is transmitted at the resource location, carrying out detection, by the terminal, according to a corresponding sequence;
or,
further comprising: when the SFN indication information is divided into two parts, carrying out decoding, by the terminal, according to a channel corresponding to each part to acquire the SFN indication information.

11. The method according to claim 9, further comprising:
when the consecutive M radio frames are divided into H radio frame groups, carrying out decoding, by the terminal, according to a scrambling code sequence corresponding to each radio frame group.

12. The method according to claim 11, further comprising:
when the SFN indication information is encoded and then divided into L parts, carrying out decoding, by the terminal, according to a dividing way of the SFN indication information.

13. A base station, comprising a setting module and a transmitting module, wherein
the setting module (41) is configured to set X resource locations for carrying System Frame Number, SFN, indication information in an SFN information cycle period; and
the transmitting module (42) is configured to transmit the SFN indication information at at least one resource location in each SFN information cycle period;
wherein one SFN information cycle period includes 1024 radio frames;
wherein each resource location consists of consecutive M radio frames, X=2^{Y}, Y >= 0 and Y<10; and the M is 2, 4, 8, 16, 32 or 64;
the transmitting module is further configured to transmit the SFN indication information over K sub-frames of each of the consecutive M radio frames, where K is 1, 2, 4,5 or 10;
**characterized in that**:
the consecutive M radio frames are divided into H radio frame groups, where H is an integer and 1<=H<=M;
each radio frame group includes L radio frames, the SFN indication information is encoded and then divided into L parts, and each part is repeatedly transmitted within one radio frame.

14. The base station according to claim 13, wherein
when 0<Y<10, initial radio frame numbers of the X resource locations are allocated at an equal interval in the SFN information cycle period;
or,
the transmitting module is further configured to: when 0<Y<10 and each resource location consists of a single radio frame, repeatedly transmit the SFN indication information over single radio frames at an interval of P=2^{10-Y} radio frames;
or,
the transmitting module further configured to transmit an enhanced broadcast channel bearing the SFN indication information in the K sub-frames, wherein two or four OFDM symbols in one sub-frame, or all available OFDM symbols in one time slot, or all available symbols except the first three symbols in one sub-frame, or all available OFDM symbols in one sub-frame are used for transmitting the enhanced broadcast channel;
or,
the transmitting module is further configured to divide the consecutive M radio frames into H radio frame groups, wherein different radio frame groups correspond to different scrambling codes, and H is an integer more than or equal to 1 and less than or equal to M.

15. The base station according to claim 13, wherein
the setting module is further configured to: when X=1024 and the SFN information cycle period is 1024, set the resource location for carrying the SFN indication information to be all the radio frames in the SFN information cycle period and set each resource location to correspond to one radio frame in the SFN information cycle period;
or,
the transmitting module is further configured to: encode the SFN indication information and transmit the encoded SFN indication information at the resource location; or, map the SFN indication information into a predefined sequence and transmit the sequence corresponding to the SFN indication information at the resource location;
or,
the transmitting module is further configured to divide the SFN indication information into two parts, and transmit the two parts of information over different channels respectively.

16. The base station according to claim 13, wherein the SFN indication information is a Master Information Block, MIB, of a Long Term Evolution, LTE, system, or indication information containing an SFN.

17. The base station according to claim 16, wherein the indication information containing an SFN comprises:
indication information only comprising an SFN, or
indication information comprising an SFN and repetition times of a system message, or
indication information comprising an SFN and repetition times of a control channel, or
indication information comprising an SFN, repetition times of a system message and repetition times of a control channel.

18. A terminal, comprising:
a detecting module (43), which is configured to detect System Frame Number, SFN, indication information which is transmitted at at least one resource location in an SFN information cycle period to obtain an SFN of a current frame, wherein
X resource locations for carrying SFN indication information are set in one SFN information cycle period;
wherein one SFN information cycle period includes 1024 radio frames;
wherein each resource location consists of consecutive M radio frames;
wherein X=2^{Y}, Y >= 0 and Y< 10; and the M is 2, 4, 8, 16, 32 or 64;
further comprising: receiving the SFN indication information over K sub-frames of each of the consecutive M radio frames, where K is 1, 2, 4, 5 or 10;
the detecting module is configured to: when each resource location consists of consecutive M radio frames, carry out detection with the consecutive M radio frames as a unit;
**characterized in that**:
the consecutive M radio frames are divided into H radio frame groups, where H is an integer and 1 <=H<=M;
each radio frame group includes L radio frames, the SFN indication information is encoded and then divided into L parts, and each part is repeatedly transmitted within one radio frame.

19. The terminal according to claim 18, further comprising a computing module (44), which is configured to compute an SFN of a subsequent radio frame.

20. The terminal according to claim 18, wherein
the detecting module is configured to: when X=1024 and the SFN information cycle period is 1024, detect the SFN indication information transmitted over each radio frame to acquire the SFN indication information;
or,
the detecting module is configured to: when the SFN indication information is encoded and then transmitted at the resource location, carry out decoding according to a corresponding encoding method; or, when the SFN indication information is mapped into a predefined sequence and the sequence corresponding to the SFN indication information is transmitted at the resource location, carry out detection according to a corresponding sequence;
or,
the detecting module is further configured to: when the consecutive M radio frames are divided into H radio frame groups, carry out decoding according to a scrambling code sequence corresponding to each radio frame group;
or,
the detecting module is further configured to: when the SFN indication information is encoded and then divided into L parts, carry out decoding according to a dividing way of the SFN indication information;
or,
the detecting module is further configured to: when the SFN indication information is divided into two parts, carry out decoding according to a channel corresponding to each part to acquire the SFN indication information.

## Patentansprüche

1. Verfahren zum Senden von Systemrahmennummer, SFN,-Informationen, umfassend:
Festlegen (201) durch eine Basisstation von X Ressourcenpositionen zum Befördern von SFN-Anzeigeinformationen in einer SFN-Informationszyklusperiode, wobei eine SFN-Informationszyklusperiode 1024 Funkrahmen umfasst; und
Senden (202) durch die Basisstation der SFN-Anzeigeinformationen in mindestens einer Ressourcenposition in jeder SFN-Informationszyklusperiode;
wobei jede Ressourcenposition aus M aufeinander folgenden Funkrahmen besteht:
wobei X = 2^{Y}, Y >= 0 und Y < 10; und M 2, 4, 8, 16, 32 oder 64 ist;
ferner umfassend: Senden der SFN-Anzeigeinformationen über K Unterrahmen jedes der M aufeinander folgenden Funkrahmen, wobei K 1, 2, 4, 5 oder 10 ist;
**dadurch gekennzeichnet, dass**:
die M aufeinander folgenden Funkrahmen in H Funkrahmengruppen geteilt werden, wobei H eine ganze Zahl ist und 1 <= H <= M;
jede Funkrahmengruppe L Funkrahmen umfasst, die SFN-Anzeigeinformationen codiert und dann in L Teile geteilt werden, und jeder Teil innerhalb eines Funkrahmens wiederholt gesendet wird.

2. Verfahren nach Anspruch 1,
ferner umfassend: derartiges Festlegen, wenn X = 1024 und die SFN-Informationszyklusperiode 1024 beträgt, in der SFN-Informationszyklusperiode der Ressourcenposition zum Befördern der SFN-Anzeigeinformationen, dass sie alle der Funkrahmen in der SFN-Informationszyklusperiode ist, und derartiges Festlegen jeder Ressourcenposition, dass sie einem Funkrahmen entspricht; oder
ferner umfassend: Codieren der SFN-Anzeigeinformationen und Senden der der codierten Anzeigeinformationen in der Ressourcenposition; oder Zuordnen der SFN-Anzeigeinformationen zu einer vordefinierten Folge und Senden der vordefinierten Folge, die den SFN-Anzeigeinformationen in der Ressourcenposition entspricht; oder
ferner umfassend: Teilen durch die Basisstation der SFN-Anzeigeinformationen in zwei Teile und Senden der beiden Teile von Informationen jeweils über verschiedene Kanäle.

3. Verfahren nach Anspruch 1, wobei, wenn 0 < Y < 10, anfängliche Funkrahmennummern der X Ressourcenpositionen in einem gleichen Intervall in der SFN-Informationszyklusperiode zugeordnet werden.

4. Verfahren nach Anspruch 3, ferner umfassend:
wiederholtes Senden durch die Basisstation der SFN-Anzeigeinformationen über einzelne Funkrahmen in einem Intervall von P = 2^{10-Y} Funkrahmen, wenn SFN 0 < Y < 10 und jede Ressourcenposition aus einem einzigen Funkrahmen besteht.

5. Verfahren nach Anspruch 1, wobei es sich bei den SFN-Anzeigeinformationen um einen Masterinformationsblock, MIB, eines LTE (Long Term Evolution)-Systems oder Anzeigeinformationen handelt, die eine FSN enthalten.

6. Verfahren nach Anspruch 5, wobei die Anzeigeinformationen, die eine SFN enthalten, umfassen:
Anzeigeinformationen, die nur eine SFN umfassen, oder
Anzeigeinformationen, die eine SFN und Wiederholungszeiten einer Systemnachricht umfassen, oder
Anzeigeinformationen, die eine SFN und Wiederholungszeiten eines Steuerkanals umfassen, oder
Anzeigeinformationen, die eine SFN, Wiederholungszeiten einer Systemnachricht und Wiederholungszeiten eines Steuerkanals umfassen.

7. Verfahren nach Anspruch 1, ferner umfassend:
Senden eines erweiterten Broadcast-Kanals, der die SFN-Anzeigeinformationen in den K Unterrahmen überträgt, wobei zwei oder vier OFDM (orthogonales Frequenzmultiplex)-Symbole in einem Unterrahmen oder alle verfügbaren OFDM-Symbole in einem Zeitschlitz oder alle verfügbaren Symbole mit Ausnahme der ersten drei Symbole in einem Unterrahmen oder alle verfügbaren OFDM-Symbole in einem Unterrahmen zum Senden des erweiterten Broadcast-Kanals verwendet werden.

8. Verfahren nach Anspruch 1, ferner umfassend:
wobei verschiedene Funkrahmengruppen verschiedenen Verwürfelungscodes entsprechen, und H eine ganze Zahl größer oder gleich 1 und kleiner oder gleich M ist.

9. Verfahren zum Empfangen von Systemrahmennummer, SFN,-Informationen, umfassend:
Erkennen (301) durch ein Endgerät von SFN-Anzeigeinformationen, die in mindestens einer Ressourcenposition in einer SFN-Informationszyklusperiode gesendet werden, um eine SFN eines aktuellen Rahmens zu erhalten, wobei X Ressourcenpositionen zum Befördern der SFN-Anzeigeinformationen in einer SFN-Informationszyklusperiode festgelegt werden;
wobei eine SFN-Informationszyklusperiode 1024 Funkrahmen umfasst;
wobei jede Ressourcenposition aus M aufeinander folgenden Funkrahmen besteht:
wobei X = 2^{Y}, Y >= 0 und Y < 10; und M 2, 4, 8, 16, 32 oder 64 ist;
ferner umfassend: Empfangen der SFN-Anzeigeinformationen über K Unterrahmen jedes der M aufeinander folgenden Funkrahmen, wobei K 1, 2, 4, 5 oder 10 ist;
Ausführen von Erkennung durch das Endgerät, wenn jede Ressourcenposition aus M aufeinander folgenden Funkrahmen besteht, mit den M aufeinander folgenden Rahmen als eine Einheit;
**dadurch gekennzeichnet, dass**:
die M aufeinander folgenden Funkrahmen in H Funkrahmengruppen geteilt werden, wobei H eine ganze Zahl ist und 1 <= H <= M;
jede Funkrahmengruppe L Funkrahmen umfasst, die SFN-Anzeigeinformationen codiert und dann in L Teile geteilt werden, und jeder Teil innerhalb eines Funkrahmens wiederholt gesendet wird.

10. Verfahren nach Anspruch 9, ferner umfassend: Erkennen durch das Endgerät, wenn X = 1024 und die SFN-Informationszyklusperiode 1024 beträgt, der SFN-Anzeigeinformationen, die über jeden Funkrahmen gesendet werden, um die SFN-Anzeigeinformationen zu erfassen; oder
ferner umfassend: Ausführen von Decodierung durch das Endgerät gemäß einem entsprechenden Codierverfahren, wenn die SFN-Anzeigeinformationen codiert und dann in der Ressourcenposition gesendet werden; oder Ausführen von Erkennung durch das Endgerät gemäß einer entsprechenden Folge, wenn die SFN-Anzeigeinformationen einer vordefinierten Folge zugeordnet werden, und die Folge, die den SFN-Anzeigeinformationen entspricht, in der Ressourcenposition gesendet wird; oder
ferner umfassend: Ausführen von Decodierung durch das Endgerät, wenn die SFN-Anzeigeinformationen in zwei Teile geteilt werden, gemäß einem Kanal, der jedem Teil entspricht, um die SFN-Anzeigeinformationen zu erfassen.

11. Verfahren nach Anspruch 9, ferner umfassend:
Ausführen von Decodierung durch das Endgerät, wenn die M aufeinander folgenden Funkrahmen in H Funkrahmengruppen geteilt werden, gemäß einer Verwürfelungscodefolge, die jeder Funkrahmengruppe entspricht.

12. Verfahren nach Anspruch 11, ferner umfassend:
Ausführen von Decodierung durch das Endgerät gemäß einer Teilungsweise der SFN-Anzeigeinformationen, wenn die SFN-Anzeigeinformationen codiert und in L Teile geteilt werden.

13. Basisstation, umfassend en Festlegungsmodul und ein Sendemodul, wobei
das Festlegungsmodul (41) zum Festlegen von X Ressourcenpositionen zum Befördern von Systemrahmennummer, SFN,-Anzeigeinformationen in einer SFN-Informationszyklusperiode konfiguriert ist; und
das Sendemodul (42) zum Senden der SFN-Anzeigeinformationen in mindestens einer Ressourcenposition in jeder SFN-Informationszyklusperiode konfiguriert ist;
wobei eine SFN-Informationszyklusperiode 1024 Funkrahmen umfasst;
wobei jede Ressourcenposition aus M aufeinander folgenden Funkrahmen besteht, X = 2^{Y}, Y >= 0 und Y < 10; und M 2, 4, 8, 16, 32 oder 64 ist;
das Sendemodul ferner zum Senden der SFN-Anzeigeinformationen über K Unterrahmen jedes der M aufeinander folgenden Funkrahmen konfiguriert ist, wobei K 1, 2, 4, 5 oder 10 ist;
**dadurch gekennzeichnet, dass**:
die M aufeinander folgenden Funkrahmen in H Funkrahmengruppen geteilt werden, wobei H eine ganze Zahl ist und 1 <= H <= M;
jede Funkrahmengruppe L Funkrahmen umfasst, die SFN-Anzeigeinformationen codiert und dann in L Teile geteilt werden, und jeder Teil innerhalb eines Funkrahmens wiederholt gesendet wird.

14. Basisstation nach Anspruch 13, wobei,
wenn 0 < Y < 10, anfängliche Funkrahmennummern der X Ressourcenpositionen in einem gleichen Intervall in der SFN-Informationszyklusperiode zugeordnet werden; oder
das Sendemodul ferner konfiguriert ist zum: wiederholten Senden der SFN-Anzeigeinformationen über einzelne Funkrahmen in einem Intervall von P = 2^{10-Y} Funkrahmen, wenn 0 < Y < 10 und jede Ressourcenposition aus einem einzigen Funkrahmen besteht; oder
das Sendemodul ferner zum Senden eines erweiterten Broadcast-Kanals konfiguriert ist, der die SFN-Anzeigeinformationen in den K Unterrahmen überträgt, wobei zwei oder vier OFDM-Symbole in einem Unterrahmen oder alle verfügbaren OFDM-Symbole in einem Zeitschlitz oder alle verfügbaren Symbole mit Ausnahme der ersten drei Symbole in einem Unterrahmen oder alle verfügbaren OFDM-Symbole in einem Unterrahmen zum Senden des erweiterten Broadcast-Kanals verwendet werden; oder
das Sendemodul ferner zum Teilen der M aufeinander folgenden Funkrahmen in H Funkrahmengruppen konfiguriert ist, wobei verschiedene Funkrahmengruppen verschiedenen Verwürfelungscodes entsprechen, und H eine ganze Zahl größer oder gleich 1 und kleiner oder gleich M ist.

15. Basisstation nach Anspruch 13, wobei,
das Festlegungsmodul ferner konfiguriert ist zum: derartigen Festlegen, wenn X = 1024 und die SFN-Informationszyklusperiode 1024 beträgt, der Ressourcenposition zum Befördern der SFN-Anzeigeinformationen, dass sie alle der Funkrahmen in der SFN-Informationszyklusperiode ist, und derartigen Festlegen jeder Ressourcenposition, dass sie einem Funkrahmen in der SFN-Informationszyklusperiode entspricht; oder
das Sendemodul ferner konfiguriert ist zum: Codieren der SFN-Anzeigeinformationen und Senden der codierten Anzeigeinformationen in der Ressourcenposition; oder Zuordnen der SFN-Anzeigeinformationen zu einer vordefinierten Folge und Senden der vordefinierten Folge, die den SFN-Anzeigeinformationen in der Ressourcenposition entspricht; oder
das Sendemodul ferner zum Teilen der SFN-Anzeigeinformationen in zwei Teile und Senden der beiden Teile von Informationen jeweils über verschiedene Kanäle konfiguriert ist.

16. Basisstation nach Anspruch 13, wobei es sich bei den SFN-Anzeigeinformationen um einen Masterinformationsblock, MIB, eines LTE (Long Term Evolution)-Systems oder Anzeigeinformationen handelt, die eine SFN enthalten.

17. Basisstation nach Anspruch 16, wobei die Anzeigeinformationen, die eine SFN enthalten, umfassen:
Anzeigeinformationen, die nur eine SFN umfassen, oder
Anzeigeinformationen, die eine SFN und Wiederholungszeiten einer Systemnachricht umfassen, oder
Anzeigeinformationen, die eine SFN und Wiederholungszeiten eines Steuerkanals umfassen, oder
Anzeigeinformationen, die eine SFN, Wiederholungszeiten einer Systemnachricht und Wiederholungszeiten eines Steuerkanals umfassen.

18. Endgerät, umfassend:
ein Erkennungsmodul (43), das zum Erkennen von Systemrahmennummer, SFN,-Anzeigeinformationen konfiguriert ist, die in mindestens einer Ressourcenposition in einer SFN-Informationszyklusperiode gesendet werden, um eine SFN eines aktuellen Rahmens zu erhalten, wobei
X Ressourcenpositionen zum Befördern von SFN-Anzeigeinformationen in einer SFN-Informationszyklusperiode festgelegt werden;
wobei eine SFN-Informationszyklusperiode 1024 Funkrahmen umfasst;
wobei jede Ressourcenposition aus M aufeinander folgenden Funkrahmen besteht:
wobei X = 2^{Y}, Y >= 0 und Y < 10; und M 2, 4, 8, 16, 32 oder 64 ist;
ferner umfassend: Empfangen der SFN-Anzeigeinformationen über K Unterrahmen jedes der M aufeinander folgenden Funkrahmen, wobei K 1, 2, 4, 5 oder 10 ist;
das Erkennungsmodul konfiguriert ist zum: Ausführen von Erkennung, wenn jede Ressourcenposition aus M aufeinander folgenden Funkrahmen besteht, mit den M aufeinander folgenden Rahmen als eine Einheit;
**dadurch gekennzeichnet, dass**:
die M aufeinander folgenden Funkrahmen in H Funkrahmengruppen geteilt werden, wobei H eine ganze Zahl ist und 1 <= H <= M;
jede Funkrahmengruppe L Funkrahmen umfasst, die SFN-Anzeigeinformationen codiert und dann in L Teile geteilt werden, und jeder Teil innerhalb eines Funkrahmens wiederholt gesendet wird.

19. Endgerät nach Anspruch 18, ferner umfassend ein Rechenmodul (44), das zum Berechnen einer SFN eines nachfolgenden Funkrahmens konfiguriert ist.

20. Endgerät nach Anspruch 18, wobei
das Erkennungsmodul konfiguriert ist zum: Erkennen, wenn X = 1024 und die SFN-Informationszyklusperiode 1024 beträgt, der SFN-Anzeigeinformationen, die über jeden Funkrahmen gesendet werden, um die SFN-Anzeigeinformationen zu erfassen; oder
das Erkennungsmodul konfiguriert ist zum: Ausführen von Decodierung gemäß einem entsprechenden Codierverfahren, wenn die SFN-Anzeigeinformationen codiert und dann in der Ressourcenposition gesendet werden; oder Ausführen von Erkennung gemäß einer entsprechenden Folge, wenn die SFN-Anzeigeinformationen einer vordefinierten Folge zugeordnet werden, und die Folge, die den SFN-Anzeigeinformationen entspricht, in der Ressourcenposition gesendet wird; oder
das Erkennungsmodul ferner konfiguriert ist zum: Ausführen von Decodierung, wenn die M aufeinander folgenden Funkrahmen in H Funkrahmengruppen geteilt werden, gemäß einer Verwürfelungscodefolge, die jeder der Funkrahmengruppe entspricht; oder
das Erkennungsmodul ferner konfiguriert ist zum: Ausführen von Decodierung gemäß einer Teilungsweise der SFN-Anzeigeinformationen, wenn die SFN-Anzeigeinformationen codiert und in L Teile geteilt werden; oder
das Erkennungsmodul ferner konfiguriert ist zum: Ausführen von Decodierung, wenn die SFN-Anzeigeinformationen in zwei Teile geteilt werden, gemäß einem Kanal, der jedem Teil entspricht, um die SFN-Anzeigeinformationen zu erfassen.

## Revendications

1. Procédé de transmission d'informations de numéro de trame système, SFN, comportant les étapes ci-dessous consistant à :
définir (201), par le biais d'une station de base, X emplacements de ressources pour transporter des informations d'indication de numéro SFN dans une période de cycle d'informations de numéro SFN, dans lequel une période de cycle d'informations de numéro SFN inclut 1 024 trames radio ; et
transmettre (202), par le biais de la station de base, les informations d'indication de numéro SFN au niveau d'au moins un emplacement de ressources dans chaque période de cycle d'informations de numéro SFN ;
dans lequel chaque emplacement de ressources se compose de M trames radio consécutives ;
dans lequel X = 2^{Y}, Y > = 0 et Y < 10 ; et
M est égal à 2, 4, 8, 16, 32 ou 64 ;
comportant en outre l'étape consistant à : transmettre les informations d'indication de numéro SFN sur K sous-trames de chacune des M trames radio consécutives, où K est égal à 1, 2, 4, 5 ou 10 ;
**caractérisé en ce que** :
les M trames radio consécutives sont divisées en H groupes de trames radio, où H est un nombre entier et 1 < = H < = M ;
chaque groupe de trames radio inclut L trames radio, les informations d'indication de numéro SFN sont codées et ensuite divisées en L parties, et chaque partie est transmise de manière répétée au sein d'une trame radio.

2. Procédé selon la revendication 1,
comportant en outre l'étape consistant à : lorsque X = 1 024 et lorsque la période de cycle d'informations de numéro SFN est de 1 024, dans la période de cycle d'informations de numéro SFN, définir l'emplacement de ressources pour transporter les informations d'indication de numéro SFN comme correspondant à la totalité des trames radio dans la période de cycle d'informations de numéro SFN, et définir chaque emplacement de ressources afin qu'il corresponde à une trame radio ;
ou,
comportant en outre les étapes consistant à : coder les informations d'indication de numéro SFN et transmettre les informations d'indication de numéro SFN codées au niveau de l'emplacement de ressources ; ou, mettre en correspondance les informations d'indication de numéro SFN dans une séquence prédéfinie et transmettre la séquence prédéfinie correspondant aux informations d'indication de numéro SFN au niveau de l'emplacement de ressources ;
ou,
comportant en outre les étapes consistant à : diviser, par le biais de la station de base, les informations d'indication de numéro SFN, en deux parties, et transmettre les deux parties d'informations sur différents canaux, respectivement.

3. Procédé selon la revendication 1, dans lequel, lorsque 0 < Y < 10, des numéros de trames radio initiaux des X emplacements de ressources sont affectés à un intervalle identique dans la période de cycle d'informations de numéro SFN.

4. Procédé selon la revendication 3, comportant en outre l'étape ci-dessous consistant à :
lorsque 0 < Y < 10 et lorsque chaque emplacement de ressources se compose d'une unique trame radio, transmettre de manière répétée, par le biais de la station de base, les informations d'indication de numéro SFN sur des trames radio uniques à un intervalle de P = 2^{10-Y} trames radio.

5. Procédé selon la revendication 1, dans lequel les informations d'indication de numéro SFN correspondent à un bloc d'informations maître, MIB, d'un système de technologie d'évolution à long terme, LTE, ou à des informations d'indication contenant un numéro SFN.

6. Procédé selon la revendication 5, dans lequel les informations d'indication contenant un numéro SFN comportent :
des informations d'indication comportant uniquement un numéro SFN ; ou
des informations d'indication comportant un numéro SFN et des temps de répétition d'un message système ; ou
des informations d'indication comportant un numéro SFN et des temps de répétition d'un canal de commande ; ou
des informations d'indication comportant un numéro SFN, des temps de répétition d'un message système et des temps de répétition d'un canal de commande.

7. Procédé selon la revendication 1, comportant en outre l'étape ci-dessous consistant à :
transmettre un canal de diffusion amélioré transportant les informations d'indication de numéro SFN dans les K sous-trames, dans lequel deux ou quatre symboles de multiplexage par répartition orthogonale de la fréquence, OFDM, dans une sous-trame, ou tous les symboles de multiplexage OFDM disponibles dans une tranche de temps, ou tous les symboles disponibles à l'exception des trois premiers symboles dans une sous-trame, ou tous les symboles de multiplexage OFDM disponibles dans une sous-trame, sont utilisés en vue de transmettre le canal de diffusion amélioré.

8. Procédé selon la revendication 1, dans lequel en outre :
différents groupes de trames radio correspondent à différents codes d'embrouillage, et H est un nombre entier supérieur ou égal à 1 et inférieur ou égal à M.

9. Procédé de réception d'informations de numéro de trame système, SFN, comportant les étapes ci-dessous consistant à :
détecter (301), par le biais d'un terminal, des informations d'indication de numéro SFN qui sont transmises au niveau d'au moins un emplacement de ressources dans une période de cycle d'informations de numéro SFN en vue d'obtenir un numéro SFN d'une trame en cours, dans lequel X emplacements de ressources pour transporter les informations d'indication de numéro SFN sont définis dans une période de cycle d'informations de numéro SFN ;
dans lequel une période de cycle d'informations de numéro SFN inclut 1 024 trames radio ;
dans lequel chaque emplacement de ressources se compose de M trames radio consécutives ;
dans lequel X = 2^{Y}, Y > = 0 et Y < 10 ; et
M est égal à 2, 4, 8, 16, 32 ou 64 ;
comportant en outre les étapes consistant à : recevoir les informations d'indication de numéro SFN sur K sous-trames de chacune des M trames radio consécutives, où K est égal à 1, 2, 4, 5 ou 10 ;
lorsque chaque emplacement de ressources se compose de M trames radio consécutives, mettre en oeuvre une détection, par le terminal, avec les M trames radio consécutives en tant qu'une unité ;
**caractérisé en ce que** :
les M trames radio consécutives sont divisées en H groupes de trames radio, où H est un nombre entier et 1 < = H < = M ;
chaque groupe de trames radio inclut L trames radio, les informations d'indication de numéro SFN sont codées et ensuite divisées en L parties, et chaque partie est transmise de manière répétée au sein d'une trame radio.

10. Procédé selon la revendication 9, comportant en outre l'étape consistant à : lorsque X = 1 024 et lorsque la période de cycle d'informations de numéro SFN est de 1 024, détecter, par le terminal, les informations d'indication de numéro SFN transmises sur chaque trame radio en vue d'acquérir les informations d'indication de numéro SFN ;
ou,
comportant en outre l'étape consistant à : lorsque les informations d'indication de numéro SFN sont codées et ensuite transmises au niveau de l'emplacement de ressources, mettre en oeuvre un décodage, par le terminal, selon un procédé de codage correspondant ; ou, lorsque les informations d'indication de numéro SFN sont mises en correspondance avec une séquence prédéfinie et lorsque la séquence correspondant aux informations d'indication de numéro SFN est transmise au niveau de l'emplacement de ressources, mettre en oeuvre une détection, par le terminal, selon une séquence correspondante ;
ou,
comportant en outre l'étape consistant à : lorsque les informations d'indication de numéro SFN sont divisées en deux parties, mettre en oeuvre un décodage, par le terminal, selon un canal correspondant à chaque partie, en vue d'acquérir les informations d'indication de numéro SFN.

11. Procédé selon la revendication 9, comportant en outre l'étape ci-dessous consistant à :
lorsque les M trames radio consécutives sont divisées en H groupes de trames radio, mettre en oeuvre un décodage, par le terminal, selon une séquence de codes d'embrouillage correspondant à chaque groupe de trames radio.

12. Procédé selon la revendication 11, comportant en outre l'étape ci-dessous consistant à :
lorsque les informations d'indication de numéro SFN sont codées et ensuite divisées en L parties, mettre en oeuvre un décodage, par le terminal, selon un mode de division des informations d'indication de numéro SFN.

13. Station de base, comportant un module de définition et un module de transmission, dans laquelle
le module de définition (41) est configuré de manière à définir X emplacements de ressources pour transporter des informations d'indication de numéro de trames système, SFN, dans une période de cycle d'informations de numéro SFN ; et
le module de transmission (42) est configuré de manière à transmettre les informations d'indication de numéro SFN au niveau d'au moins un emplacement de ressources dans chaque période de cycle d'informations de numéro SFN ;
dans laquelle une période de cycle d'informations de numéro SFN inclut 1 024 trames radio ;
dans lequel chaque emplacement de ressources se compose de M trames radio consécutives, dans lequel X = 2^{Y}, Y > = 0 et Y < 10 ; et M est égal à 2, 4, 8, 16, 32 ou 64 ;
le module de transmission est en outre configuré de manière à transmettre les informations d'indication de numéro SFN sur K sous-trames de chacune des M trames radio consécutives, où K est égal à 1, 2, 4, 5 ou 10 ;
**caractérisée en ce que** :
les M trames radio consécutives sont divisées en H groupes de trames radio, où H est un nombre entier et 1 < = H < = M ;
chaque groupe de trames radio inclut L trames radio, les informations d'indication de numéro SFN sont codées et ensuite divisées en L parties, et chaque partie est transmise de manière répétée au sein d'une trame radio.

14. Station de base selon la revendication 13, dans laquelle
lorsque 0 < Y < 10, des numéros de trames radio initiaux des X emplacements de ressources sont affectés à un intervalle identique dans la période de cycle d'informations de numéro SFN ;
ou,
le module de transmission est en outre configuré de manière à : lorsque 0 < Y < 10 et lorsque chaque emplacement de ressources se compose d'une unique trame radio, transmettre de manière répétée les informations d'indication de numéro SFN sur des trames radio uniques à un intervalle de P = 2^{10-Y} trames radio ;
ou,
le module de transmission est en outre configuré de manière à transmettre un canal de diffusion amélioré transportant les informations d'indication de numéro SFN dans les K sous-trames, dans laquelle deux ou quatre symboles de multiplexage OFDM dans une sous-trame, ou tous les symboles de multiplexage OFDM disponibles dans une tranche de temps, ou tous les symboles disponibles à l'exception des trois premiers symboles dans une sous-trame, ou tous les symboles de multiplexage OFDM disponibles dans une sous-trame, sont utilisés en vue de transmettre le canal de diffusion amélioré ;
ou,
le module de transmission est en outre configuré de manière à diviser les M trames radio consécutives en H groupes de trames radio, dans laquelle différents groupes de trames radio correspondent à différents codes d'embrouillage, et H est un nombre entier supérieur ou égal à 1 et inférieur ou égal à M.

15. Station de base selon la revendication 13, dans laquelle
le module de définition est en outre configuré de manière à : lorsque X = 1 024 et lorsque la période de cycle d'informations de numéro SFN est de 1 024, définir l'emplacement de ressources pour transporter les informations d'indication de numéro SFN afin qu'il corresponde à la totalité des trames radio dans la période de cycle d'informations de numéro SFN, et définir chaque emplacement de ressources afin qu'il corresponde à une trame radio dans la période de cycle d'informations de numéro SFN ;
ou,
le module de transmission est en outre configuré de manière à : coder les informations d'indication de numéro SFN et transmettre les informations d'indication de numéro SFN codées au niveau de l'emplacement de ressources ; ou, mettre en correspondance les informations d'indication de numéro SFN dans une séquence prédéfinie et transmettre la séquence prédéfinie correspondant aux informations d'indication de numéro SFN au niveau de l'emplacement de ressources ;
ou,
le module de transmission est en outre configuré de manière à diviser les informations d'indication de numéro SFN en deux parties, et à transmettre les deux parties d'informations sur différents canaux, respectivement.

16. Station de base selon la revendication 13, dans laquelle les informations d'indication de numéro SFN correspondent à un bloc d'informations maître, MIB, d'un système de technologie d'évolution à long terme, LTE, ou à des informations d'indication contenant un numéro SFN.

17. Station de base selon la revendication 16, dans laquelle les informations d'indication contenant un numéro SFN comportent :
des informations d'indication comportant uniquement un numéro SFN ; ou
des informations d'indication comportant un numéro SFN et des temps de répétition d'un message système ; ou
des informations d'indication comportant un numéro SFN et des temps de répétition d'un canal de commande ; ou
des informations d'indication comportant un numéro SFN, des temps de répétition d'un message système et des temps de répétition d'un canal de commande.

18. Terminal, comportant :
un module de détection (43), lequel est configuré de manière à détecter des informations d'indication de numéro de trames système, SFN, qui sont transmises au niveau d'au moins un emplacement de ressources dans une période de cycle d'informations de numéro SFN en vue d'obtenir un numéro SFN d'une trame en cours, dans lequel X emplacements de ressources pour transporter les informations d'indication de numéro SFN sont définis dans une période de cycle d'informations de numéro SFN ;
dans lequel une période de cycle d'informations de numéro SFN inclut 1 024 trames radio ;
dans lequel chaque emplacement de ressources se compose de M trames radio consécutives ;
dans lequel X = 2^{Y}, Y > = 0 et Y < 10 ; et
M est égal à 2, 4, 8, 16, 32 ou 64 ;
comportant en outre l'étape consistant à : recevoir les informations d'indication de numéro SFN sur K sous-trames de chacune des M trames radio consécutives, où K est égal à 1, 2, 4, 5 ou 10;
le module de détection est configuré de manière à : lorsque chaque emplacement de ressources se compose de M trames radio consécutives, mettre en oeuvre une détection avec les M trames radio consécutives en tant qu'une unité ;
**caractérisé en ce que** :
les M trames radio consécutives sont divisées en H groupes de trames radio, où H est un nombre entier et 1 < = H < = M ;
chaque groupe de trames radio inclut L trames radio, les informations d'indication de numéro SFN sont codées et ensuite divisées en L parties, et chaque partie est transmise de manière répétée au sein d'une trame radio.

19. Terminal selon la revendication 18, comportant en outre un module de calcul (44), lequel est configuré de manière à calculer un numéro SFN d'une trame radio subséquente.

20. Terminal selon la revendication 18, dans lequel
le module de détection est configuré de manière à : lorsque X = 1 024 et lorsque la période de cycle d'informations de numéro SFN est de 1 024, détecter les informations d'indication de numéro SFN transmises sur chaque trame radio, en vue d'acquérir les informations d'indication de numéro SFN ;
ou,
le module de détection est configuré de manière à : lorsque les informations d'indication de numéro SFN sont codées et ensuite transmises au niveau de l'emplacement de ressources, mettre en oeuvre un décodage selon un procédé de codage correspondant ; ou, lorsque les informations d'indication de numéro SFN sont mises en correspondance avec une séquence prédéfinie et lorsque la séquence correspondant aux informations d'indication de numéro SFN est transmise à l'emplacement de ressources, mettre en oeuvre une détection selon une séquence correspondante ;
ou,
le module de détection est en outre configuré de manière à : lorsque les M trames radio consécutives sont divisées en H groupes de trames radio, mettre en oeuvre un décodage selon une séquence de codes d'embrouillage correspondant à chaque groupe de trames radio ;
ou,
le module de détection est en outre configuré de manière à : lorsque les informations d'indication de numéro SFN sont codées et ensuite divisées en L parties, mettre en oeuvre un décodage selon un mode de division des informations d'indication de numéro SFN ;
ou,
le module de détection est en outre configuré de manière à : lorsque les informations d'indication de numéro SFN sont divisées en deux parties, mettre en oeuvre un décodage selon un canal correspondant à chaque partie, en vue d'acquérir les informations d'indication de numéro SFN.
